(19) Europäisches Patentamt
European Patent Office
Office européen des brevets

(11) **EP 1 227 333 B1**

(12) **FASCICULE DE BREVET EUROPEEN**

(45) Date de publication et mention de la délivrance du brevet:
**09.01.2008 Bulletin 2008/02**

(51) Int Cl.:
***G01S 5/02*** (2006.01)

(21) Numéro de dépôt: **02290023.7**

(22) Date de dépôt: **07.01.2002**

(54) **Procédé et dispositif de localisation d'un émetteur terrestre à partir d'un satellite**

Verfahren und Gerät zur Positionsbestimmung eines erdgebundenen Senders mittels eines Satelliten

Method and device to locate a ground-based emitter from a satellite

(84) Etats contractants désignés:
**AT BE CH CY DE DK ES FI FR GB GR IE IT LI LU MC NL PT SE TR**

(30) Priorité: **15.01.2001 FR 0100463**

(43) Date de publication de la demande:
**31.07.2002 Bulletin 2002/31**

(73) Titulaire: **Alcatel Lucent**
**75008 Paris (FR)**

(72) Inventeurs:
• **Martinerie, Francis**
**31860 Labarthe sur Leze (FR)**
• **Bassaler, Jean-Marc**
**31100 Toulouse (FR)**

(74) Mandataire: **Esselin, Sophie et al**
**Marks & Clerk France**
**31-33 Avenue Aristide Briand**
**94117 Arcueil Cedex (FR)**

(56) Documents cités:
**US-A- 3 949 400**      **US-A- 4 276 553**
**US-A- 5 412 389**

## EP 1 227 333 B1

**Description**

L'invention porte sur les dispositifs de localisation d'émetteurs et en particulier sur les procédés de localisation d'émetteurs terrestres par des satellites.

Il est connu du document US-A-3 949 400 d'utiliser un satellite géostationnaire et une base au sol pour déterminer la position d'une balise dans une zone prédéterminée. La balise émet un signal particulier permettant son identification. Le satellite comporte un faisceau d'antenne balayant la zone prévue selon un cycle prédéterminé. Le faisceau d'antenne détecte des signaux seulement suivant une direction extrêmement précise. Lorsque le faisceau d'antenne est orienté en direction de la balise, le satellite intercepte le signal de la balise et détermine ainsi la position de cette balise en fonction de la position du satellite et du placement du faisceau d'antenne dans son cycle de balayage. Il renvoie la position de la balise à une station terrestre.

Il est en outre connu du document JP-08263853 d'utiliser une unité de commande pour orienter une antenne vers un satellite de communication émetteur. L'unité de commande calcule l'amplitude des mouvements à imposer à l'antenne pour la placer en face du satellite souhaité et commande les mouvements de l'antenne. L'orientation de l'antenne est réalisée plus précisément en déplaçant l'antenne de façon à déterminer la position pour laquelle le signal reçu en provenance du satellite émetteur est le plus élevé.

Cependant, ces dispositifs et leurs procédés de fonctionnement ne permettent de localiser que des émetteurs dont le signal émis est spécifiquement prévu pour être détecté.

Il est par ailleurs connu du document Solution and Performance Analysis of Geolocation by TDOA.IEEE Transactions on Aerospace and Electric Systems, Vol.29 N˚4, Oct 1993, d'utiliser plusieurs instruments non colocalisés, suffisamment espacés pour permettre la réalisation de mesures de différences de temps de trajet et/ou de différences de dopplers.

Les documents Principes de traitement des signaux radar et sonar, De Le Chevalier, éditions Masson, et Méthodes à haute résolution, de S.Marcos, éditions Hermès, décrivent des méthodes relatives à la localisation d'émetteurs par des systèmes antennaires. Ce type de dispositif constitue la base de la mise en oeuvre de traitements par goniométrie d'amplitude, goniométrie de phase ou par méthode dite à "haute résolution", permettant la localisation d'émetteurs à partir de mesures effectuées sur des réseaux d'antennes.

Le document Principes de traitement des signaux radar et sonar, De Le Chevalier, éditions Masson décrit par ailleurs un procédé de localisation d'émetteur en utilisant les propriétés d'une antenne directive; la localisation de l'émetteur est obtenue en déterminant l'orientation de l'antenne pour laquelle l'énergie reçue par cette antenne est maximale.

De tels dispositifs ne permettent pas la détection d'émetteurs non autorisés ou d'émetteurs de brouillage, susceptibles par exemple de perturber le fonctionnement des systèmes de télécommunication. Ces dispositifs requièrent soit plusieurs satellites disséminés et munis d'une antenne pour localiser un émetteur, soit un satellite présentant plusieurs antennes.

Il existe donc un besoin pour une antenne qui résolve un ou plusieurs de ces inconvénients. Dans cette optique, l'invention concerne un procédé de localisation d'un émetteur terrestre par un satellite géostationnaire muni d'une antenne, comprenant des étapes consistant à mesurer sur le satellite, à au moins deux instants différents, trois composantes orthogonales d'un champ électromagnétique émis par l'émetteur terrestre, à calculer au moins deux vecteurs de champ électromagnétique à partir des mesures, à déterminer la direction de propagation du champ électromagnétique à partir des vecteurs déterminés, à localiser l'émetteur à l'intersection d'une droite, colinéaire à la direction de propagation et passant par le satellite, avec la surface de la terre.

Selon une variante, la détermination de la direction de propagation du champ électromagnétique est effectuée par identification d'un vecteur pour lequel le carré de la somme des produits scalaires avec les vecteurs de champ électromagnétique déterminés est minimal.

Selon une autre variante, la détermination de la direction de propagation du champ électromagnétique s'effectue en déterminant un vecteur, défini par la somme des produits vectoriels entre au moins deux vecteurs de champ électromagnétique calculés.

Selon encore une variante, l'étape de calcul comprend la multiplication des composantes de champ mesurées par l'inverse de la fonction de transfert de l'antenne.

Selon encore une autre variante, les localisations sont effectuées par au moins deux satellites; le procédé comprend en outre une étape de triangulation des localisations réalisées par les deux satellites.

Un autre mode de réalisation de l'invention concerne un procédé de localisation d'un émetteur terrestre émettant un champ électromagnétique polarisé linéairement, par un satellite défilant, comprenant des étapes consistant à mesurer sur le satellite, à au moins deux instants différents, trois composantes orthogonales d'un champ électromagnétique émis par l'émetteur terrestre, à calculer des vecteurs de champ électromagnétique à partir des mesures à déterminer pour chaque mesure un plan contenant la direction de propagation du champ électromagnétique mesuré et le satellite, à partir des vecteurs calculés à localiser l'émetteur à l'intersection de plusieurs cercles, formés par l'intersection des plans avec la surface de la terre.

Un autre mode de réalisation de l'invention concerne un procédé de localisation d'un émetteur terrestre émettant un champ électromagnétique polarisé linéairement, par plusieurs satellites, comprenant des étapes consistant à mesurer sur les satellites, à un même instant trois composantes orthogonales d'un champ électromagnétique émis par l'émetteur terrestre, à calculer des vecteurs de champ électromagnétique à partir des mesures, à déterminer pour chaque mesure un plan contenant la direction de propagation du champ électromagnétique mesuré et le satellite, à partir des vecteurs calculés à localiser l'émetteur à l'intersection de plusieurs cercles, formés par l'intersection des plans avec la surface de la terre.

Selon une variante, ces procédés comprennent en outre une étape de mesure complémentaire, par mesure à doppler différentiel, par interférométrie ou par goniométrie.

Selon encore une variante, ces procédés comprennent en outre une étape de filtrage fréquentiel du champ électromagnétique mesuré.

L'invention concerne également un satellite de localisation d'émetteur, comprenant une antenne et des moyens pour mettre en oeuvre les procédés de localisation selon l'invention.

D'autres caractéristiques et avantages de l'invention apparaîtront à la lecture de la description qui suit du mode de réalisation de l'invention donnée à titre d'exemple et en référence aux dessins qui montrent :

- figure 1, une représentation schématique d'une antenne de satellite réceptionnant le champ électromagnétique d'un émetteur terrestre;

- figure 2, une représentation schématique des positions d'un satellite défilant mettant en oeuvre un deuxième procédé de localisation;

L'invention propose de déterminer la localisation d'un émetteur terrestre en mesurant le vecteur champ électromagnétique à différents instants depuis une antenne de satellite. La direction de propagation du champ électromagnétique, et ainsi la localisation de l'émetteur, est déterminée à partir des vecteurs mesurés. Dans l'exemple qui suit, l'antenne réceptionne trois composantes orthogonales de champ électromagnétique mais il suffit selon l'invention de mesurer trois composantes non coplanaires pour reconstituer le champ.

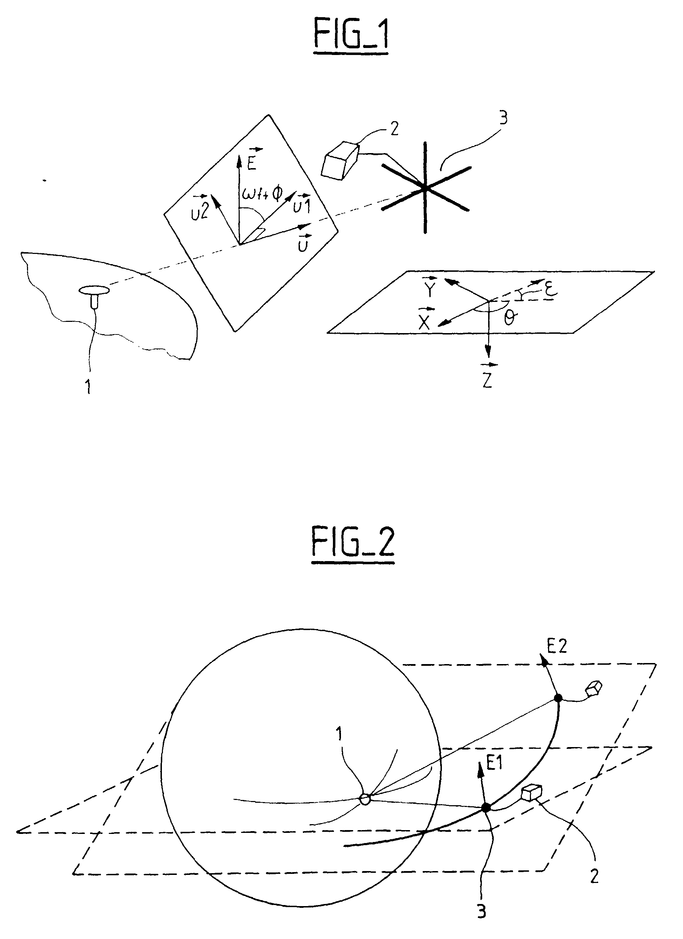

La figure 1 présente un émetteur terrestre 1 émettant un champ électromagnétique $\bar{E}$ dont la direction de propagation est représentée par $\bar{u}$. Un satellite 2, placé en orbite de la terre, comprend une antenne 3, susceptible de réceptionner trois composantes orthogonales du champ électromagnétique, polarisé non linéairement au niveau de l'antenne.

L'antenne utilisée pour la réception du champ électromagnétique peut présenter trois dipôles orthogonaux, susceptibles par exemple de réceptionner en polarisation linéaire trois composantes orthogonales entre elles d'un champ électromagnétique. Il est également possible d'utiliser une antenne susceptible de réceptionner simplement trois composantes de champ électromagnétique non colinéaires, comme décrit précédemment. Les procédés de localisation présentés par la suite étant sensiblement indépendants de la fréquence du champ électromagnétique, ils s'appliquent notamment à une antenne de type large bande, susceptible de réceptionner par exemples plusieurs octaves. On peut par exemple utiliser des antennes monopoles, des antennes cadre, des antennes boucles ou des antennes à base de dipoles.

Le champ électromagnétique est représenté par un vecteur situé dans un plan de polarisation. Les oscillations du champ électromagnétique sont à tout instant situées dans ce plan car quelle que soit la polarisation d'un champ électromagnétique émis, le champ électromagnétique est toujours orthogonal à sa direction de propagation.

Un procédé de localisation selon un premier mode de réalisation comprend une première étape consistant à effectuer des mesures des trois composantes du champ électromagnétique à différents instants, depuis un satellite géostationnaire. Ainsi, la direction de propagation du champ électromagnétique reçu reste identique pour chaque mesure. A partir de chaque mesure de champ électromagnétique, on détermine des vecteurs de champ électromagnétique instantanés. Ainsi, lorsque la polarisation du champ électromagnétique est non linéaire, les différents vecteurs déterminés sont non colinéaires. Un procédé de localisation comprend la détermination de la direction de propagation du champ électromagnétique, c'est-à-dire la détermination d'un vecteur $\bar{u}$ perpendiculaire à au moins deux vecteurs de champ électromagnétique déterminés par la mesure.

Un premier procédé consiste à effectuer n mesures de champ électromagnétique et à déterminer n vecteurs $\bar{E}n$ représentatifs de ces mesures et à déterminer le vecteur unitaire $\bar{u}$ pour lequel la somme des projections de ces n vecteurs est la plus faible.

Appelons $\bar{E}$ le champ électromagnétique émis par l'émetteur. Les coordonnées instantanées de $\bar{E}$ dans un repère ($\bar{u}1$, $\bar{u}2$) du plan de polarisation peuvent par exemple se présenter sous la forme: $\bar{E}$ (E1.cos($\omega$t+$\phi$),E2.sin($\omega$t+$\phi$)).

On représente les composantes des vecteurs $\bar{E}n$ dans un repère d'antenne ($\bar{X}u$, $\bar{Y}$, $\bar{Z}$). Pour faciliter les calculs, on choisit un ($\bar{X}u$, $\bar{Y}$, $\bar{Z}$) tel que $u$ 1 soit placé dans le plan ($\bar{X}u$, $\bar{Y}$). Les composantes de $\bar{E}$ dans le repère ($\bar{X}u$, $\bar{Y}$, $\bar{Z}$) se présentent alors sous la forme:

$$\vec{E} = \begin{bmatrix} Ex \\ Ey \\ Ez \end{bmatrix} = \begin{bmatrix} E1.\cos(\omega t + \phi).(-\sin\theta) + E2.\sin(\omega t + \phi).(-\sin\varepsilon.\cos\theta) \\ E1.\cos(\omega t + \phi).(-\cos\theta) + E2.\sin(\omega t + \phi).(\sin\varepsilon.\sin\theta) \\ E2.\sin(\omega t + \phi).(-\cos\theta) \end{bmatrix}$$

La direction de propagation étant orthogonale au champ de polarisation, la relation suivante doit être vérifiée à tout instant:

$$\vec{E}.\vec{u} = 0$$

Ainsi, en pratique, il suffit de déterminer le vecteur $\bar{u}$ pour lequel la variable J, définie comme suit, est minimale: (le vecteur $\bar{u}$ est aussi défini par les angles azimut θ et élévation ε dans le repère d'antenne)

$$J(\theta, \varepsilon) = \sum_{i=1}^{n} \left( \vec{E}i.\vec{u}(\theta, \varepsilon) \right)^2$$

On peut alors déterminer la position de l'émetteur à partir de la position du satellite et du vecteur de propagation $\bar{u}$ déterminé. Il suffit pour cela de définir un point d'intersection entre une droite passant par l'antenne et de même direction que le vecteur, $\bar{u}$ et la surface terrestre. On détermine en général deux points à la surface terrestre de cette façon. L'émetteur correspond à celui des points qui se trouve en vis-à-vis de l'antenne.

Selon un autre procédé, il est également possible de déterminer un vecteur $\bar{u}$ en effectuant le produit vectoriel des différents vecteurs $\bar{E}n$ entre eux. On peut par exemple déterminer le vecteur $\bar{u}$ par la formule suivante:

$$\vec{u} = \sum_{i,j=1}^{n} \left( \vec{E}i \wedge \vec{E}j \right)$$

En éliminant les termes $\bar{E}i \wedge \bar{E}j$ qui ne sont pas orientés vers la terre.

L'antenne ne mesure en général pas le champ électromagnétique réel mais un champ électromagnétique qui fait intervenir la fonction de transfert de l'antenne. Ainsi, en particulier dans le cas où l'antenne n'est pas omnidirectionnelle, il est souhaitable de faire intervenir la fonction de transfert de l'antenne dans la détermination des vecteurs $\bar{E}n$ un calculateur reçoit n vecteurs $\bar{E}'n$, de champ électromagnétique instantané, mesurés par l'antenne. Le calculateur détermine alors n vecteurs $\bar{E}n$, en tenant compte de la fonction de transfert de l'antenne. Les vecteurs $\bar{E}n$ déterminés se rapprochent ainsi des vecteurs du champ électromagnétique réel.

En désignant la matrice correspondant à la fonction de transfert de l'antenne par G, les vecteurs $\bar{E}n$ peuvent ainsi être formés en utilisant la formule suivante:

$$\vec{E}n = G^{-1}(\theta, \varepsilon).\vec{E}'n$$

*Avec*

$$G = \begin{bmatrix} Gxx(\theta, \varepsilon) & Gxy(\theta, \varepsilon) & Gxz(\theta, \varepsilon) \\ Gxy(\theta, \varepsilon) & Gyy(\theta, \varepsilon) & Gyz(\theta, \varepsilon) \\ Gxz(\theta, \varepsilon) & Gyz(\theta, \varepsilon) & Gzz(\theta, \varepsilon) \end{bmatrix}$$

Selon un perfectionnement de ces procédés, on utilise deux satellites espacés effectuant des mesures simultanées. On effectue ensuite une triangulation des localisations des satellites, au sens du maximum de vraisemblance, pour obtenir une localisation de l'émetteur avec une précision améliorée.

Cependant dans certains cas, le champ électromagnétique, émis linéairement par un émetteur, parvient à l'antenne avec une polarisation linéaire après avoir traversé l'atmosphère. On va maintenant exposer d'autres modes de réalisation permettent de localiser un émetteur pour ce type de polarisation.

Ainsi, un deuxième mode de réalisation de l'invention concerne un procédé permettant de localiser un émetteur depuis une antenne de satellite défilant. En effet, comme cela est représenté à la figure 2, selon les intervalles de temps définis entre les mesures, un tel satellite peut s'être déplacé considérablement par rapport à l'émetteur qu'il doit localiser. Ainsi, la direction de propagation du champ électromagnétique reçu par l'antenne du satellite aura varié entre les mesures. La mesure d'un vecteur champ électromagnétique permet de déterminer un plan perpendiculaire à ce vecteur, dans lequel la direction de propagation est contenue. Ainsi, on peut définir l'intersection d'un tel plan avec la surface terrestre. Cette intersection a globalement la forme d'un cercle, sur lequel est situé l'émetteur. En effectuant deux mesures depuis deux positions différentes à des instants différents, on peut déterminer la position de l'émetteur en définissant l'intersection de deux cercles ainsi formés sur la surface terrestre.

Un troisième mode de réalisation de l'invention concerne un procédé permet tant de localiser l'émetteur à partir de deux satellites distants. Les deux satellites effectuent chacun une mesure non simultanée pour former un vecteur de champ électromagnétique. A partir de chaque vecteur, on peut déterminer un plan qui lui est perpendiculaire. Comme dans le procédé précédant, on définit des cercles sur la surface terrestre. L'émetteur se trouve à une intersection de ces cercles.

Selon une variante de ces procédés, on effectue simultanément des mesures complémentaires, telles que des mesures à doppler différentiel, par interférométrie ou par goniométrie. On peut ainsi obtenir une localisation plus précise de l'émetteur.

Selon une autre variante de ces procédés, on effectue une discrimination fréquentielle du champ électromagnétique reçu. On peut, par exemple, effectuer une transformation de Fourier du champ électromagnétique reçu. On peut également effectuer un filtrage et un pré traitement de séparation fréquentielle du champ électromagnétique reçu, pour limiter les mesures à une bande de fréquence déterminée. On peut ainsi limiter le traitement des composantes du champ électromagnétique dans une cellule de résolution fréquentielle. Une telle limitation permet de distinguer des émetteurs de fréquences différentes. On peut ainsi localiser des émetteurs indépendamment de leur fréquence d'émission. Une telle limitation permet également de distinguer des émetteurs de même fréquence ayant des localisations terrestres différentes conduisant à des dopplers différents.

## Revendications

1.  Procédé de localisation d'un émetteur (1) terrestre par un satellite (2) géostationnaire muni d'une antenne (3), comprenant des étapes consistant à:

    - mesurer sur le satellite (2), à au moins deux instants différents, trois composantes orthogonales d'un champ électromagnétique émis par l'émetteur terrestre (1);
    - calculer au moins deux vecteurs de champ électromagnétique à partir des mesures;
    - déterminer la direction de propagation du champ électromagnétique à partir des vecteurs déterminés;
    - localiser l'émetteur (1) à l'intersection d'une droite, colinéaire à la direction de propagation et passant par le satellite (2), avec la surface de la terre.

2.  Le procédé de localisation de la revendication 1, **caractérisé en ce que** la détermination de la direction de propagation du champ électromagnétique est effectuée par identification d'un vecteur pour lequel le carré de la somme des produits scalaires avec les vecteurs de champ électromagnétique déterminés est minimal.

3.  Le procédé de localisation de la revendication 1, **caractérisé en ce que** la détermination de la direction de propagation du champ électromagnétique s'effectue en déterminant un vecteur, défini par la somme des produits vectoriels entre au moins deux vecteurs de champ électromagnétique calculés.

4.  Le procédé de localisation de l'une des revendications 1 à 3, **caractérisé en ce que** l'étape de calcul comprend la multiplication des composantes de champ mesurées par l'inverse de la fonction de transfert de l'antenne (3).

5.  Le procédé de l'une des revendications 1 à 4, **caractérisé en ce que** les localisations sont effectuées par au moins deux satellites (2), le procédé comprenant en outre une étape de triangulation des localisations réalisées par les deux satellites.

**6.** Procédé de localisation d'un émetteur terrestre (1) émettant un champ électromagnétique polarisé linéairement, par un satellite défilant (2), comprenant des étapes consistant à:

- mesurer sur le satellite, à au moins deux instants différents, trois composantes orthogonales d'un champ électromagnétique émis par l'émetteur terrestre;
- calculer des vecteurs de champ électromagnétique à partir des mesures;
- déterminer pour chaque mesure un plan contenant la direction de propagation du champ électromagnétique mesuré et le satellite, à partir des vecteurs calculés;
- localiser l'émetteur à l'intersection de plusieurs cercles, formés par l'intersection des plans avec la surface de la terre.

**7.** Procédé de localisation d'un émetteur terrestre (1) émettant un champ électromagnétique polarisé linéairement, par plusieurs satellites (2), comprenant des étapes consistant à:

- mesurer sur les satellites, à un même instant trois composantes orthogonales d'un champ électromagnétique émis par l'émetteur terrestre;
- calculer des vecteurs de champ électromagnétique à partir des mesures;
- déterminer pour chaque mesure un plan contenant la direction de propagation du champ électromagnétique mesuré et le satellite, à partir des vecteurs calculés;
- localiser l'émetteur à l'intersection de plusieurs cercles, formés par l'intersection des plans avec la surface de la terre.

**8.** Le procédé de l'une des revendications précédentes, **caractérisé en ce qu'**il comprend en outre une étape de mesure complémentaire, par mesure à doppler différentiel, par interférométrie ou par goniométrie.

**9.** Le procédé de l'une des revendications précédentes, **caractérisé en ce qu'**il comprend en outre une étape de filtrage fréquentiel du champ électromagnétique mesuré.

**10.** Satellite (2) de localisation d'émetteur, comprenant une antenne (3) et des moyens pour mettre en oeuvre les procédés de l'une des revendications 1 à 9.

**Claims**

**1.** Method of locating a terrestrial transmitter (1) by a geostationary satellite (2) provided with an antenna (3), comprising steps consisting in:

- measuring on the satellite (2), at at least two different instants, three orthogonal components of an electromagnetic field emitted by the terrestrial transmitter (1);
- calculating at least two electromagnetic field vectors from the measurements;
- determining the direction of propagation of the electromagnetic field from the determined vectors;
- locating the transmitter (1) at the intersection of a straight line, colinear to the direction of propagation and passing through the satellite (2), with the surface of the earth.

**2.** Locating method according to Claim 1, **characterized in that** the direction of propagation of the electromagnetic field is determined by identifying a vector for which the square of the sum of the scalar products with the determined electromagnetic field vectors is minimal.

**3.** Locating method according to Claim 1, **characterized in that** the direction of propagation of the electromagnetic field is determined by determining a vector, defined by the sum of the vector products between at least two calculated electromagnetic field vectors.

**4.** Locating method according to one of Claims 1 to 3, **characterized in that** the calculation step comprises multiplying the measured field components by the inverse of the transfer function of the antenna (3).

**5.** Method according to one of Claims 1 to 4, **characterized in that** the locatings are performed by at least two satellites (2), the method also comprising a step for triangulating the locatings performed by the two satellites.

6. Method of locating a terrestrial transmitter (1) emitting a linearly polarized electromagnetic field, by an orbiting satellite (2), comprising steps consisting in:

    - measuring on the satellite, at at least two different instants, three orthogonal components of an electromagnetic field emitted by the terrestrial transmitter;
    - calculating electromagnetic field vectors from the measurements;
    - determining for each measurement a plane containing the direction of propagation of the measured electromagnetic field and the satellite, from the calculated vectors;
    - locating the transmitter at the intersection of a number of circles, formed by the intersection of the planes with the surface of the earth.

7. Method of locating a terrestrial transmitter (1) emitting a linearly polarized electromagnetic field, by a number of satellites (2), comprising steps consisting in:

    - measuring on the satellites, at one and the same instant, three orthogonal components of an electromagnetic field emitted by the terrestrial transmitter;
    - calculating electromagnetic field vectors from the measurements;
    - determining for each measurement a plane containing the direction of propagation of the measured electromagnetic field and the satellite, from the calculated vectors;
    - locating the transmitter at the intersection of a number of circles, formed by the intersection of the planes with the surface of the earth.

8. Method according to one of the preceding claims, **characterized in that** it also comprises an additional measurement step, using differential Doppler measurements, interferometry or goniometry.

9. Method according to one of the preceding claims, **characterized in that** it also comprises a measured electromagnetic field frequency filtering step.

10. Transmitter-locating satellite (2), comprising an antenna (3) and means for implementing the methods according to one of Claims 1 to 9.

**Patentansprüche**

1. Verfahren zum Lokalisieren eines terrestrischen Senders (1) durch einen geostationären Satelliten (2), der mit einer Antenne (3) versehen ist, das die folgenden Schritte aufweist:

    - in mindestens zwei unterschiedlichen Augenblicken Messen von drei orthogonalen Komponenten eines von dem terrestrischen Sender (1) gesendeten elektromagnetischen Felds auf dem Satelliten (2);
    - Berechnen von mindestens zwei Vektoren des elektromagnetischen Felds ausgehend von den Messungen;
    - Bestimmen der Ausbreitungsrichtung des elektromagnetischen Felds ausgehend von den bestimmten Vektoren;
    - Lokalisieren des Senders (1) an der Schnittstelle zwischen einer Geraden, die mit der Ausbreitungsrichtung kolinear ist und durch den Satelliten (2) verläuft, und der Erdoberfläche.

2. Lokalisierungsverfahren nach Anspruch 1, **dadurch gekennzeichnet, dass** das Bestimmen der Ausbreitungsrichtung des elektromagnetischen Felds durch Identifizieren eines Vektors erfolgt, für den das Quadrat der Summe der skalaren Produkte mit den bestimmten Vektoren des elektromagnetischen Felds minimal ist.

3. Lokalisierungsverfahren nach Anspruch 1, **dadurch gekennzeichnet, dass** das Bestimmen der Ausbreitungsrichtung des elektromagnetischen Felds erfolgt, indem man einen Vektor bestimmt, der von der Summe der Vektorprodukte zwischen mindestens zwei berechneten Vektoren des elektromagnetischen Felds definiert ist.

4. Lokalisierungsverfahren nach einem der Ansprüche 1 bis 3, **dadurch gekennzeichnet, dass** der Berechnungsschritt das Multiplizieren der gemessenen Komponenten des Felds mit dem Umgekehrten der Transferfunktion der Antenne (3) aufweist.

5. Verfahren nach einem der Ansprüche 1 bis 4, **dadurch gekennzeichnet, dass** die Lokalisierungen durch mindestens zwei Satelliten (2) ausgeführt werden, wobei das Verfahren ferner einen Triangulationsschritt der Lokalisierungen, die von den zwei Satelliten ausgeführt wurden, aufweist.

6. Verfahren zum Lokalisieren eines terrestrischen Senders (1), der ein linear polarisiertes elektromagnetisches Feld sendet, durch einen durchlaufenden Satelliten (2), das die folgenden Schritte aufweist:

   - in mindestens zwei unterschiedlichen Augenblicken Messen von drei orthogonalen Komponenten eines von dem terrestrischen Sender (1) gesendeten elektromagnetischen Felds auf dem Satelliten (2);
   - Berechnen der Vektoren des elektromagnetischen Felds ausgehend von den Messungen;
   - für jede Messung Bestimmen einer Ebene, die die Ausbreitungsrichtung des gemessenen elektromagnetischen Felds und den Satelliten enthält, ausgehend von den berechneten Vektoren;
   - Lokalisieren des Senders an der Schnittstelle mehrerer Kreise, die von der Schnittstelle der Ebenen mit der Erdoberfläche gebildet werden.

7. Verfahren zum Lokalisieren eines terrestrischen Senders (1), der ein linear polarisiertes elektromagnetisches Feld erzeugt, durch mehrere Satelliten (2), das die folgenden Schritte aufweist:

   - in einem gleichen Augenblick Messen von drei orthogonalen Komponenten eines von dem terrestrischen Sender gesendeten elektromagnetischen Felds auf den Satelliten;
   - Berechnen der Vektoren des elektromagnetischen Felds ausgehend von den Messungen;
   - für jede Messung Bestimmen einer Ebene, die die Ausbreitungsrichtung des gemessenen elektromagnetischen Felds und den Satelliten enthält, ausgehend von den berechneten Vektoren;
   - Lokalisieren des Senders an der Schnittstelle mehrerer Kreise, die von der Schnittstelle der Ebenen mit der Erdoberfläche gebildet werden.

8. Verfahren nach einem der vorhergehenden Ansprüche, **dadurch gekennzeichnet, dass** es ferner einen ergänzenden Messschritt durch Differenz-Dopplermessung, durch Interferometrie oder durch Goniometrie aufweist.

9. Verfahren nach einem der vorhergehenden Ansprüche, **dadurch gekennzeichnet, dass** es ferner einen Frequenzfilterschritt des gemessenen elektromagnetischen Felds aufweist.

10. Satellit (2) zum Lokalisieren eines Senders, der mindestens eine Antenne (3) und Mittel zum Umsetzen der Verfahren nach einem der Ansprüche 1 bis 9 aufweist.

# FIG_1

# FIG_2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3949400 A

- JP 08263853 B

**Littérature non-brevet citée dans la description**

- Solution and Performance Analysis of Geolocation by TDOA. *IEEE Transactions on Aerospace and Electric Systems,* Octobre 1993, vol. 29 (4